(19) Europäisches Patentamt
European Patent Office
Office européen des brevets

(11) **EP 2 363 685 B1**

(12) **EUROPÄISCHE PATENTSCHRIFT**

(45) Veröffentlichungstag und Bekanntmachung des Hinweises auf die Patenterteilung:
**20.11.2013 Patentblatt 2013/47**

(51) Int Cl.:
**G01B 9/02** (2006.01)      **G01B 11/00** (2006.01)

(21) Anmeldenummer: **10153054.1**

(22) Anmeldetag: **09.02.2010**

(54) **Vorrichtung zur Positionserfassung mit konfokalem Fabry-Perot Interferometer**

Positioning device with confocal Fabry-Perot interferometer

Dispositif de détection de la position avec interféromètre Fabry-Pérot confocal

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**07.09.2011 Patentblatt 2011/36**

(73) Patentinhaber: **Attocube Systems AG**
**80539 München (DE)**

(72) Erfinder:
• **Karrai, Khaled**
**80337 München (DE)**
• **Braun, Pierre-François**
**81371 München (DE)**

(74) Vertreter: **Patentanwälte Lambsdorff & Lange**
**Dingolfinger Strasse 6**
**81673 München (DE)**

(56) Entgegenhaltungen:
**EP-A1- 2 045 572     WO-A1-83/03010**
**DE-A1- 4 018 998**

• **ANDREI BRUNFELD, GREGORY TOKER, MOREY T. ROSCROW, JR., AND BRYAN CLARK: "Micro Fabry-Perot sensor for surface measurement" PROC. SPIE, Bd. 7063, 2008, Seiten 70630U-1-70630U-12, XP002585702 DOI: 10.1117/12.798135**

**Beschreibung**

Die Erfindung betrifft eine Vorrichtung und ein Verfahren zur Positionserfassung sowie eine Anordnung, die einen Positionierer und eine Vorrichtung zur Positionserfassung aufweist.

In vielen Anwendungsbereichen ist es erforderlich, die Position eines Objektes oder einen von diesem zurückgelegten Weg zu erfassen. Beispielsweise müssen in der Förder- und Automatisierungstechnik Positionen von Objekten überwacht und ausgewertet werden. Ein spezielles Einsatzgebiet, bei welchem die Genauigkeit der Positionserfassung von besonderer Bedeutung ist, ist die Positioniertechnik, bei welcher ein Objekt gezielt und definiert verfahren wird. Derartige Positionierer kommen beispielsweise in der Forschung und Industrie zum Einsatz. Neben einer möglichst hohen Genauigkeit und einem gro-βen Messbereich spielen Eigenschaften wie Erschütterungs-Unempfindlichkeit, Robustheit und Kompaktheit des Aufbaus im praktischen Gebrauch eine wesentliche Rolle.

Aus der Schrift EP 2 045 572 A1 ist eine Vorrichtung zur Positionserfassung bekannt, welche als Detektorkopf ein Fabry-Perot Interferometer verwendet. Das in dem Fabry-Perot Interferometer erzeugte Interferenzmuster wird mittels eines Detektors detektiert. Eine Auswerteschaltung führt eine Quadraturauswertung des von dem Detektor erzeugten Detektorsignals durch. Die Vorrichtung erlaubt eine sehr genaue Positionsbestimmung bzw. Weglängenmessung, wobei jedoch hohe Anforderungen an die Spiegelparallelität des Fabry-Perot Interferometerresonators gestellt werden, die die Baukosten und den Montageaufwand erhöhen, den Einsatzbereich begrenzen und den Messbereich der Vorrichtung limitieren können.

Die Druckschrift WO 83/03010 A1 offenbart eine Vorrichtung zur Positionserfassung mit einem konfokalen Fabry-Perot Interferometer. Durch die Verwendung eines konfokalen Fabry-Perot Interferometers wird laut der Druckschrift WO 83/03010 A1 eine hohe Messempfindlichkeit und eine Stabilität gegen die Justage erreicht, siehe Seite 2, Zeilen 8 - 13.

Die Druckschrift DE 40 18 998 A1 offenbart ein nichtkonfokales Fabry-Perot Interferometer zur Erfassung der Position einer verspiegelten Membrane. Ferner ist in der Schrift angegeben, dass im Fabry-Perot Resonator ein optisches System zur Fokussierung und/oder Faltung der im Fabry-Perot Resonator hin- und hergespiegelten Lichtstrahlen angeordnet sein kann (Spalte 5, Zeilen 4- 6, Spalte 11, Zeilen 59- 63, Spalte 19, Zeilen 31 -34).

Eine der Erfindung zugrunde liegende Aufgabe kann daher darin gesehen werden, eine Vorrichtung und ein Verfahren zur Positionserfassung zu schaffen, die bzw. das kostengünstig ist und in vielfältigsten Anwendungen zum Einsatz kommen kann. Insbesondere soll die Vorrichtung in einen Positionierer integrierbar sein und es erlauben, den von dem Positionierer erzeugten Positionierweg zu überwachen.

Die der Erfindung zugrunde liegende Aufgabenstellung wird durch die Merkmale der unabhängigen Ansprüche gelöst. Ausführungsformen und Weiterbildungen der Erfindung sind Gegenstand der abhängigen Ansprüche.

Gemäß Anspruch 1 weist die Vorrichtung zur Positionserfassung ein konfokales Fabry-Perot Interferometer auf. Die Konfokalität des eingesetzten Fabry-Perot Interferometers bewirkt, dass der im Resonator des Fabry-Perot Interferometers umlaufende Lichtstrahl unabhängig von Justagefehlern der im Strahlengang angeordneten Spiegel auf einen bekannten Punkt, der typischerweise der Eintrittpunkts eines in das Fabry-Perot Interferometer (Resonator) eingespeisten Lichtbündels ist, fokussiert wird. Dadurch kann ein einfacher und kostengünstiger Aufbau der Vorrichtung erreicht werden und es fällt ein geringer Justageaufwand beim Einbau der Vorrichtung in ihre Einbauumgebung, z.B. einen Positionierer, an. Darüber hinaus kann die erfindungsgemäße Vorrichtung in Einbauumgebungen mit ungünstigen Voraussetzungen (Vibrationen, geringer Einbauplatz) zum Einsatz kommen, wodurch eine Vielzahl von Anwendungen für die erfindungsgemäße Vorrichtung überhaupt erst ermöglicht werden.

Ebenfalls gemäß Anspruch 1 umfasst das konfokale Fabry-Perot Interferometer einen ersten und einen zweiten Resonatorspiegel und einen im Strahlengang zwischen dem ersten und dem zweiten Resonatorspiegel angeordneten Faltungsspiegel. Der Faltungsspiegel ist mit dem Objekt, dessen Position zu bestimmen ist, gekoppelt und ermöglicht eine  Autofokussierung, die unabhängig von der Länge des Strahlengangs im Fabry-Perot Interferometer ist. Dadurch kann auf einfache Weise ein extrem großer Messbereich von z.B. 10 cm oder mehr erreicht werden.

Vorzugsweise umfasst das konfokale Fabry-Perot Interferometer einen im Strahlengang zwischen dem ersten und dem zweiten Resonatorspiegel angeordneten Kollimator. Der Kollimator dient der Bündelung bzw. Fokussierung des Strahlengangs im Fabry-Perot Interferometer und bewirkt in Verbindung mit dem Faltungsspiegel eine Autofokussierung, die unabhängig von der Länge des Strahlengangs im Fabry-Perot Interferometer ist. Ein oder mehrere Kollimatoren können auch in einem konfokalen Fabry-Perot Interferometer ohne Faltungsspiegel vorgesehen sein.

Vorzugsweise sind der erste und der zweite Resonatorspiegel relativ zueinander lagefest angeordnet. Dadurch kann ein kompaktes und robustes Fabry-Perot Interferometer realisiert werden.

Zweckmäßigerweise ist die Finesse des Fabry-Perot Interferometers kleiner als 1,0, insbesondere kleiner als 0,5. In diesem Fall verhält sich der Interferenzkontrast des vom Fabry-Perot Interferometer erzeugten Interferenzmusters näherungsweise gemäß einer Kosinusfunktion in Abhängigkeit von der Objektposition. Dadurch wird die Auswertung eines durch Detektion des Interferenzmusters gewonnenen Messsignals in einer Auswerteschaltung wesentlich erleichtert und insbesondere die Auswertegenauigkeit erhöht.

Vorzugsweise sind der Reflexionsgrad des ersten Resonatorspiegels und der Reflexionsgrad des zweiten Resonatorspiegels in etwa gleich groß. Dadurch wird ein hoher Kontrast des Interferenzmusters und damit eine hohe Genauigkeit der Positionsbestimmung ermöglicht.

Vorzugsweise ist der zweite Resonatorspiegel durch eine Endfläche eines seitlich neben dem ersten Resonatorspiegels angeordneten optischen Teils realisiert. Beispielsweise kann es sich bei dem ersten Resonatorspiegel um die Austrittsfläche eines Kerns eines Lichtleiters und bei dem zweiten Resonatorspiegel um den den Kern seitlich umgebenden Mantel des Lichtleiters handeln. Ermöglicht wird dadurch eine konstruktiv kompakte, stabile und kostengünstige Realisierung der beiden Resonatorspiegel, die - im Falle eines Lichtleiters - in denkbar einfacher Weise allein aus der polierten Endfläche des Lichtleiters (Mantelfläche und Kernfläche) erzeugt werden können.

Durch eine geeignete Dimensionierung des zweiten Resonatorspiegels und gegebenenfalls des Kollimators kann erreicht werden, dass die erfindungsgemäße Vorrichtung eine Wegmessung bzw. Positionsbestimmung über einen Messbereich von mehr als $10^{-4}$ m, insbesondere mehr als $10^{-3}$ m und ohne Weiteres auch mehr als $10^{-2}$ m durchführen kann. Die Auflösung kann dabei über den gesamten Messweg im Sub-Nanometerbereich liegen.

Ein Verfahren zur Positionserfassung ist durch Anspruch 14 definiert. Das erfindungsgemäße Verfahren kann in der bereits beschriebenen Weise durch ein konstruktiv einfach aufgebautes Fabry-Perot Interferometer ausgeführt werden und erfordert einen vergleichsweise geringen Montage- und Justageaufwand.

Die Erfindung wird nachfolgend in beispielhafter Weise anhand der Figuren näher erläutert; in diesen zeigen:

Fig. 1    eine schematische Prinzipdarstellung eines Fabry-Perot Interferometers zur Positionsbestimmung eines Objektes sowie ein Schaubild, in welchem die Intensität des vom Interferometer reflektierten Lichtes gegenüber der Objektposition dargestellt ist;

Fig. 2    eine schematische Darstellung eines Fabry-Perot Interferometers ohne Konfokaloptik;

Fig. 3    ein Schaubild, in welchem der von dem Fabry-Perot Interferometer erzeugte Interferenzmusterkontrast gegenüber einem Verkippungswinkel eines Resonatorspiegels gegenüber der optischen Achse des Interferometers dargestellt ist;

Fig. 4    eine schematische Darstellung eines konfokalen Fabry-Perot Interferometers;

Fig. 5    eine schematische Darstellung eines Ausführungsbeispiels eines konfokalen Fabry-Perot Interferometers mit einem Faltungsspiegel im Strahlengang des Interferometer-Resonators;

Fig. 6    ein Schaubild, in welchem der von dem in Fig. 5 gezeigten konfokalen Fabry-Perot Interferometer erzeugte Interferenzmusterkontrast gegenüber einem Verkippungswinkel des Faltungsspiegels gegenüber der optischen Achse des Interferometers dargestellt ist;

Fig. 7    eine schematische Darstellung des Strahlengangs des in Fig. 5 gezeigten konfokalen Fabry-Perot Interferometers bei ausreichend verkipptem Faltungsspiegel;

Fig. 8    eine schematische Darstellung des Strahlengangs des in Fig. 5 gezeigten konfokalen Fabry-Perot Interferometers bei zu wenig verkipptem Faltungsspiegel;

Fig. 9    eine schematische Darstellung einer Ausführungsvariante des konfokalen Fabry-Perot Interferometers nach Fig. 7;

Fig. 10    eine schematische Darstellung einer weiteren Ausführungsvariante des konfokalen Fabry-Perot Interferometers nach Fig. 7;

Fig. 11    eine schematische Darstellung einer Messanordnung sowie ein Schaubild, in welchem Messkurven der Intensität des von dem konfokalen Fabry-Perot Interferometer reflektierten Lichtes gegenüber der Objektposition für drei verschiedene Weglängen aufgetragen sind;

Fig. 12    eine schematische Darstellung einer Auswerteschaltung gemäß einem Ausführungsbeispiel der Erfindung; und

Fig. 13    eine schematische Darstellung eines Ausführungsbeispiels eines Positionierers für eine Translationsbewegung.

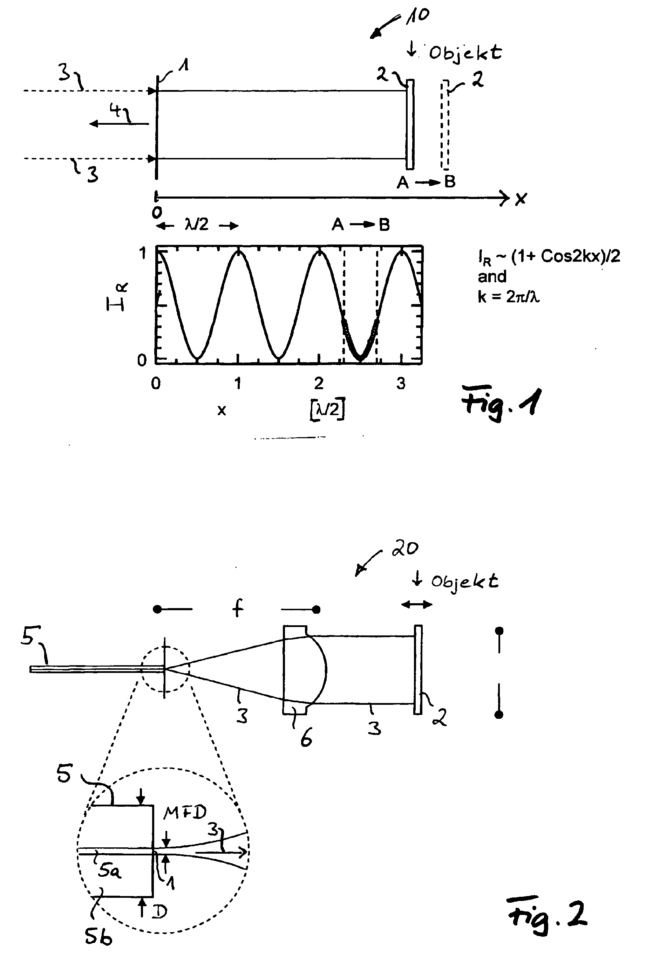

Fig. 1 veranschaulicht den prinzipiellen Aufbau eines Fabry-Perot Interferometers 10. Dieses umfasst einen ersten Resonatorspiegel 1 und einen zweiten Resonatorspiegel 2, die miteinander einen optischen Resonator bilden. Der erste Resonatorspiegel 1 ist teildurchlässig und reflektiert einen Teil des einfallenden Lichts 3 zurück. Der andere Teil durchläuft den Resonator, wird am zweiten Resonatorspiegel 2 reflektiert und teilweise von dem ersten Resonatorspiegel 1 durchgelassen. Das von dem Fabry-Perot Interferometer 10 reflektierte Licht 4 ergibt sich also aus einer Überlagerung des von dem Resonatorspiegel 1 reflektierten Lichts mit dem von dem Resonatorspiegel 2 reflektierten Licht.

Durch Messung der Intensität des reflektierten Lichts 4 lässt sich der Spiegelabstand bzw. eine Änderung des Spiegelabstands ermitteln. Im unteren Teil der Fig. 1 ist in einem Diagramm die Intensität $I_R$ des reflektierten Lichts 4 gegenüber einem Verschiebeweg x in Einheiten der halben Wellenlänge $\lambda/2$ des Messlichts der Wellenlänge $\lambda$ dargestellt. Sofern die beiden ebenen Resonatorspiegel 1, 2 einen geringen Reflexionsgrad aufweisen, der in etwa gleich groß ist, ergibt sich für die Intensität $I_R$ die einfache Beziehung $I_R \sim (1-\cos 2kx)/2$, wobei $k = 2\pi/\lambda$. Eine Wegverschiebung z.B. des zweiten Resonatorspiegels 2 vom Punkt A in den Punkt B bewirkt somit eine Änderung der Intensität $I_R$ des reflektierten Lichts 4, wie sie im unteren Teil der Fig. 1 dargestellt ist. Da die Wellenlänge $\lambda$ des Messlichtes bekannt ist, lässt sich aus einer Messung der Intensität $I_R$ des reflektierten Lichts die Verschiebung des Resonatorspiegels 2 von A nach B und somit die Änderung der Länge des Resonators des Fabry-Perot Interferometers bestimmen.

Fig. 2 zeigt ein Fabry-Perot Interferometer 20, welches auf dem anhand Fig. 1 erläuterten Prinzip basiert. Das Messlicht wird mittels eines Lichtleiters 5 zu dem Fabry-Perot Interferometer 20 geführt. Der Lichtleiter 5 umfasst einen Kern 5a und einen den Kern 5a umgebenden Mantel 5b. Der Mantel 5b weist einen (geringfügig) kleineren Brechungsindex als der Kern 5a auf. Das Messlicht 3 tritt aus dem polierten Ende des Lichtleiters 5 aus und wird von einem Kollimator 6 in ein paralleles Lichtbündel 3 gebündelt. Das parallele Lichtbündel 3 fällt auf den zweiten Resonatorspiegel 2, wird von diesem zu dem Kollimator 6 zurückreflektiert und vom Kollimator 6 fokussiert und in den Lichtleiter 5 zurückgeleitet. Die Linsenebene des Kollimators 6 befindet sich zu diesem Zweck unter einem Abstand f (Brennweite des Kollimators 6) von der Austrittsfläche des Lichtleiters 5.

Bei der in Fig. 2 dargestellten Realisierung eines Fabry-Perot Interferometers 20 wird der erste Resonatorspiegel 1 durch die Lichtaustrittsfläche des Kerns 5a gebildet. Der Resonator des Fabry-Perot Interferometers befindet sich also zwischen der Lichtaustrittsfläche des Kerns 5a und dem zweiten Resonatorspiegel 2, der lagevariabel mit dem Objekt (nicht dargestellt) gekoppelt ist.

Das Fabry-Perot Interferometer 20 funktioniert nur dann, wenn das von dem zweiten Resonatorspiegel 2 zurückgeworfene Licht nach der Fokussierung durch den Kollimator 6 wieder in den Kern 5a des Lichtleiters 5 eingekoppelt wird. Voraussetzung hierfür ist, dass der zweite Resonatorspiegel 2 mit hoher Genauigkeit senkrecht zur optischen Achse des Fabry-Perot Interferometers 20 ausgerichtet ist und diese Ausrichtung auch bei einer Bewegung des zweiten Resonatorspiegels 2 erhalten bleibt. Diese Bedingung ist konstruktiv bei einer Objektbewegung nur schwer zu erfüllen und macht in jedem Fall einen hohen Justageaufwand erforderlich. Dies lässt sich anhand einer einfachen Beispielrechnung erkennen: Der Durchmesser des Kerns 5a an der Austrittsfläche (d.h. der Durchmesser des ersten Resonatorspiegels 1) wird mit MFD (Mode Field Diameter) bezeichnet. Die Verkippung $\alpha$ des zweiten Resonatorspiegels 2 gegenüber seiner Idealposition muss die Bedingung $\alpha$ MFD/(4f) erfüllen, damit das von dem zweiten Resonatorspiegel 2 reflektierte Licht in den Kern 5a zurückgeführt wird und somit Interferenzmuster in dem reflektierten Licht 4 auftreten können. Bei MFD = 10 $\mu$m und f = 10 mm ergibt sich $\alpha$ 0,25 mRAD. Derselbe Wert würde sich beispielsweise bei MFD = 5 $\mu$m und f = 5 mm ergeben. Zur Erfüllung dieser Bedingung muss der zweite Resonatorspiegel 2 auf einer teuren Präzisionshalterung angebracht werden und eine perfekt verkippungsfreie Translationsbewegung des zweiten Resonatorspiegels 2 sichergestellt werden. Dies ist in der Praxis nicht oder nur mit hohem Aufwand zu erreichen.

Eine weitere Kenngröße eines Fabry-Perot Interferometers ist der Kontrast des im reflektierten Lichtes 4 vorhandenen Interferenzmusters. Dieser soll möglichst groß sein und beträgt optimalerweise 100%. Der Kontrast wird durch die Gleichung

$$\text{Kontrast} = \frac{R_{max} - R_{min}}{R_{max}} \qquad (1)$$

ausgedrückt. Dabei sind $R_{min}$ und $R_{max}$ durch die Ausdrücke

$$R_{min} = \frac{R_1 + R_2 - 2\sqrt{R_1 R_2}}{(1 - \sqrt{R_1 R_2})^2} \qquad (2)$$

und

$$R_{max} = \frac{R_1 + R_2 + 2\sqrt{R_1 R_2}}{(1 + \sqrt{R_1 R_2})^2} \qquad (3)$$

gegeben, wobei $R_1$ den Reflexionsgrad des ersten Resonatorspiegels und $R_2$ den Reflexionsgrad des zweiten Resonatorspiegels bezeichnen. Aus den Gleichungen ergibt sich, dass ein maximaler Kontrast für $R_1 = R_2$ erzielt wird, da in diesem Fall $R_{min} = 0$ gilt. Dies bedeutet, dass bei dem in Fig. 2 dargestellten Fabry-Perot Interferometer 20, bei welchem der erste Resonatorspiegel 1 durch eine polierte Glasendfläche mit relativ geringem Reflexionsgrad $R_1$ gebildet wird, auch der Reflexionsgrad $R_2$ des zweiten Resonatorspiegels 2 vergleichbar klein sein sollte. Beispielsweise kann der Reflexionsgrad beider Spiegel 1, 2 kleiner als 0,15, insbesondere kleiner als 0,07 sein und z.B. $R_1 = R_2 \approx 0,04$ von poliertem Glas betragen.

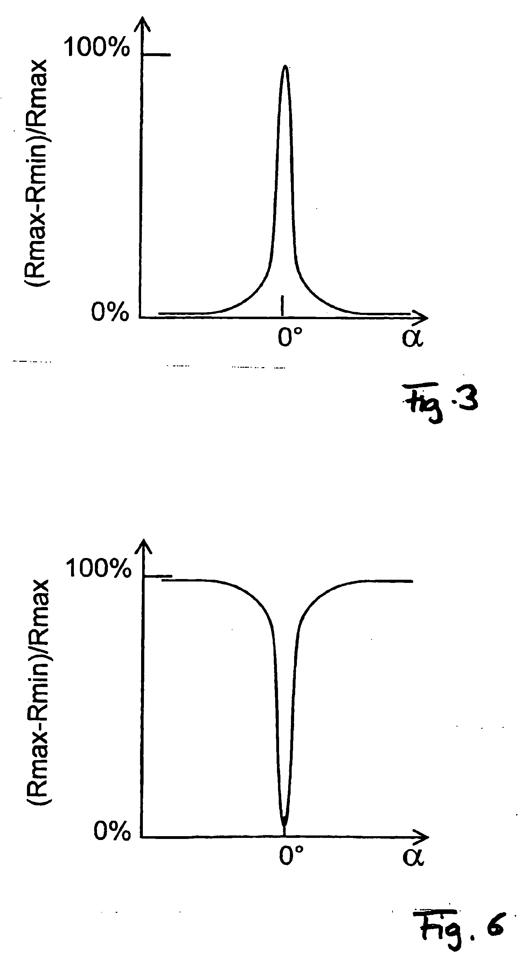

Fig. 3 zeigt den Kontrast des Fabry-Perot Interferometers 20 bei $R_1 = R_2$ als Funktion des Verkippungswinkels $\alpha$. Wie bereits erläutert ist das Interferometer nur in einem sehr engen erlaubten Bereich des Verkippungswinkels $\alpha$ funktionsfähig.

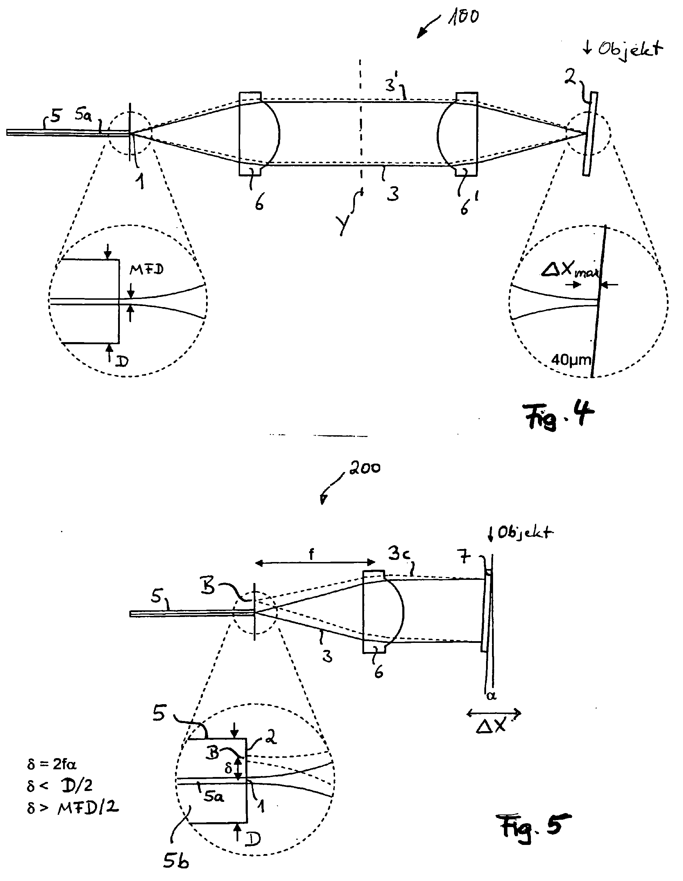

Erfindungsgemäß wird ein konfokales Fabry-Perot Interferometer eingesetzt, um das anhand Fig. 3 erläuterte Justageproblem eines nicht-konfokalen Fabry-Perot Interferometers 20 zu überwinden. Fig. 4 zeigt ein nicht erfindungsgemäßes konfokales Fabry-Perot-Interferometer 100 zur Positionsbestimmung. Gleiche oder ähnliche Teile wie in den vorhergehenden Figuren werden mit denselben Bezugszeichen bezeichnet. Das in Fig. 4 dargestellte Fabry-Perot Interferometer 100 unterscheidet sich von dem in Fig. 2 dargestellten Fabry-Perot Interferometer 20 dadurch, dass in dem Resonator ein zweiter Kollimator 6' untergebracht ist, der das von dem ersten Kollimator 6 erzeugte Lichtbündel 3 auf den zweiten Resonatorspiegel 2 fokussiert. Selbst wenn dieser, wie in Fig. 4 dargestellt, verkippt ist, wird das von dem zweiten Resonatorspiegel 2 reflektierte Licht 3' nach Durchlaufen der beiden Kollimatoren 6' und 6 wieder exakt in den Kern 5a des Lichtleiters 5 zurückgeworfen. Der zweite Kollimator 6' kann dieselbe Brennweite f wie der erste Kollimator 6 aufweisen. Die konfokale Optik 6, 6' bewirkt also, dass die in Fig. 2 im Zusammenhang mit einer Spiegelverkippung beschriebenen Probleme (hoher apparativer Aufwand, schwierige Justage) entfallen.

Das Fabry-Perot Interferometer 100 weist einen relativ kleinen Messbereich $\Delta x_{max}$ auf, da dieser durch die Tiefenschärfe des Fokus auf dem zweiten Resonatorspiegel 2 begrenzt wird. In der Praxis ist der Messbereich z.B. auf etwa 40 $\mu$m begrenzt. Größere Verschiebungswege sind daher mit dem in Fig. 4 gezeigten Fabry-Perot Interferometer 100 nicht zu erfassen.

Fig. 5 zeigt ein erfindungsgemäßes Ausführungsbeispiel für ein konfokales Fabry-Perot Interferometer 200, mit welchem ein Messbereich $\Delta x_{max}$ erreicht werden kann, der nicht durch die Brennweite f, sondern lediglich durch bauliche Gegebenheiten begrenzt wird (und daher sehr groß sein kann). Dem Fabry-Perot Interferometer 200 liegt die Idee zugrunde, den Strahlengang des in Fig. 4 gezeigten Fabry-Perot Interferometers 100 an der Mittelsenkrechten Y zwischen den Kollimatoren 6 und 6' zu falten. Die Faltung bewirkt, dass Fokuspunkte der Konfokaloptik stets auf unbewegten (lagefesten) Spiegeln auftreten, wodurch die anhand Fig. 4 erläuterte Messbereichsbeschränkung des Fabry-Perot Interferometers 100 überwunden wird. Gleichzeitig bleibt die Konfokaleigenschaft der Interferometeroptik erhalten, d.h. das in Fig. 5 dargestellte Fabry-Perot Interferometer ist ein konfokales Interferometer 200.

Die Faltung des Strahlengangs 3, 3' der in Fig. 4 dargestellten Konfokaloptik wird in dem Fabry-Perot Interferometer 200 durch einen ebenen Faltungsspiegel 7 erzielt. Der Faltungsspiegel 7 ist bewegungsmäßig mit dem Objekt (nicht dargestellt), dessen Position bzw. Positionsänderung bestimmt werden soll, gekoppelt. Der Strahlengang 3 des aus dem Lichtleiter 5 austretenden und von dem Kollimator 6 gebündelten Lichts wird von dem Faltungsspiegel 7 in den Strahlengang 3c überführt. Dabei wird von einer Verkippung $\alpha$ des Faltungsspiegels gegenüber der Senkrechten zur optischen Achse des Fabry-Perot Interferometers 200 ausgegangen. Das von dem Faltungsspiegel 7 reflektierte Lichtbündel 3c durchläuft den Kollimator 6 (der nun entsprechend dem Kollimator 6' in Fig. 4 wirkt) ein zweites Mal und wird auf die Endfläche des Lichtleiters 5 fokussiert. Dabei tritt ein Versatz von $\delta = 2f\alpha$ zwischen den beiden Fokalpunkten (d.h. der Achse des Kerns 5a und dessen Bildpunkt B auf der Endfläche des Lichtleiters 5) auf. Der in Fig. 5 eingezeichnete Strahlengang 3, 3c entspricht in Fig. 4 also dem Strahlengang 3 zwischen dem ersten Resonatorspiegel 1 und dem zweiten Resonatorspiegel 2. Die Endfläche des Lichtleiters 5 (wie im Folgenden noch näher erläutert, genauer gesagt nur die Endfläche des Mantels 5b des Lichtleiters 5) realisiert den zweiten Resonatorspiegel 2. Dieser reflektiert das auftreffende Licht und schickt es anschaulich gesprochen über denselben Weg, über welchen es gekommen ist (Kollimator 6, Faltungsspiegel 7, Kollimator 6), wieder in den Kern 5a des Lichtleiters 5 zurück.

Fig. 5 macht deutlich, dass die Konfokaleigenschaft der Interferometeroptik unabhängig von dem Verkippungs- winkel $\alpha$ ist, solange der Bildpunkt B noch die Endfläche des Lichtleiters 5 trifft. Der Durchmesser des Lichtleiters 5 (d.h. dessen Manteldurchmesser) wird mit D bezeichnet. Für den Versatz $\delta$ ergibt sich somit die Bedingung $\delta < D/2$.

Ein typischer, beispielhafter Wert für den Durchmesser D eines Lichtleiters ist D = 125 $\mu$m. Die Bedingung für den maximal zulässigen Verkippungswinkel $\alpha$ lautet $\alpha < D/(4f)$. Für f = 10 mm ergibt sich z.B. $\alpha < 3,125$ mRAD.

Es ist leicht zu erkennen, dass die erforderliche Justagegenauigkeit des Faltungsspiegels 7 im konfokalen Fabry-Perot Interferometer 200 um den Faktor D/MFD gegenüber der erforderlichen Justagegenauigkeit des zweiten Resonatorspiegels 2 in dem (nicht-konfokalen) Fabry-Perot Interferometer 20 relaxiert ist. Durch eine einfache Dimensionierung des Faserendes des Lichtleiters 5 (bzw. eines dort angebrachten Spiegels) lässt sich das Justageproblem idealerweise beliebig verkleinern.

Wie bereits erläutert, sollte für die Erzielung eines hohen Kontrasts im reflektierten Licht 4 die Bedingung $R_1 \approx R_2$ gelten. Bei der in Fig. 5 gezeigten Realisierung eines konfokalen Fabry-Perot Interferometers 200 ist dies erfüllt, da der Reflexionsgrad $R_1$ des Kerns 5a ungefähr dem Reflexionsgrad $R_2$ des Mantels 5b entspricht. Beispielsweise gilt $R_1 \approx R_2 \approx 0,04$, d.h. 4%. Der Faltungsspiegel 7 weist dann vorzugsweise einen hohen Reflexionsgrad $R_c$ größer als 0,9, insbesondere größer als 0,95 oder $R_c \approx 1,0$ (d.h. nahe 100%) auf, um bei den zwei Reflexionen die Lichtintensität so wenig wie möglich zu beeinflussen. Aufgrund des hohen Reflexionsgrads $R_c$ des Faltungsspiegels 7 funktioniert das konfokale Fabry-Perot Interferometer 200 nicht mehr für $\delta$ < MFD/2, d.h. für den Fall, dass der Bildpunkt B wie in Fig. 2 auf die Austrittsfläche des Kerns 5a fällt. Denn in diesem Fall wird der Faltungsspiegel 7 zum zweiten Resonatorspiegel, wodurch der Kontrast des Interferenzmusters im reflektierten Licht 4 gemäß Gleichung (1) einen sehr niedrigen Wert nahe Null annimmt.

Fig. 6 veranschaulicht den Kontrast des Interferenzmusters im reflektierten Licht 4 als Funktion des Verkippungswinkels $\alpha$ für das konfokale Fabry-Perot Interferometer 200. Die Kurve ist invers zu der in Fig. 3 gezeigten Kurve. In der Praxis bedeutet dies, dass hinsichtlich des Verkippungswinkels $\alpha$ genau das gegenteilige Erfordernis wie beim Fabry-Perot Interferometer 20 besteht: Der Faltungsspiegel 7 muss mit einem Verkippungswinkel $\alpha$ > MFD/(4f) gegenüber seiner "Normallage" verkippt bzw. "dejustiert" sein. Diese "Dejustagebedingung" nach Fig. 6 ist in der Praxis wesentlich einfacher zu gewährleisten als die Justagebedingung nach Fig. 3.

Mit anderen Worten: Das in Fig. 2 dargestellt Fabry-Perot Interferometer 20 kann durch denkbar einfache Maßnahmen in das konfokale Fabry-Perot Interferometer 200 überführt werden: Beispielsweise ist lediglich der Resonatorspiegel 2 mit geringem Reflexionsgrad $R_2$ durch den Faltungsspiegel 7 mit vorzugsweise hohem Reflexionsgrad $R_c$ zu ersetzen und die ohnehin schwierige Achsjustage dieses Spiegels gewollt zu vermeiden. Durch die Verdopplung der Lichtweglänge im Interferometer-Resonator wird zusätzlich eine Erhöhung der Genauigkeit um den Faktor 2 erreicht. Ansonsten wird zur Vermeidung von Wiederholungen auf die Beschreibung zu Fig. 2 Bezug genommen.

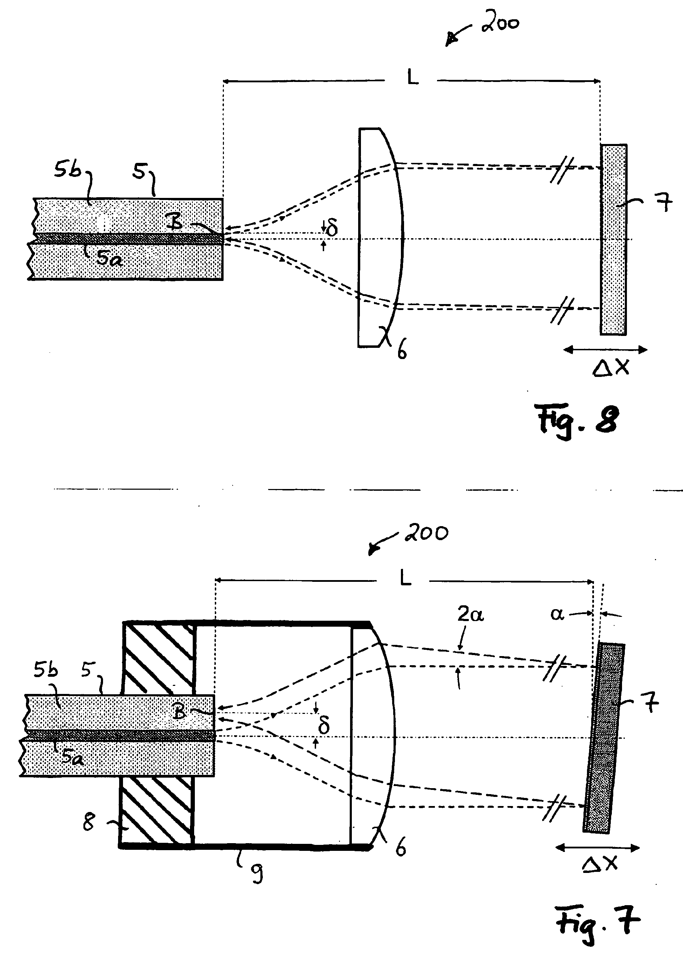

Die Figuren 7 und 8 zeigen den Strahlengang des Fabry-Perot Interferometers 200 bei unterschiedlichen Verkippungswinkeln in größerem Detail. In Fig. 7 ist der Arbeitsbereich mit $\delta$ > MFD/2 dargestellt. Der Bildpunkt B liegt außerhalb des Kerns 5a. In Fig. 8 ist der Strahlengang für eine sehr kleine Verkippung $\alpha$ dargestellt, bei welcher der Bildpunkt B in den Bereich des Kerns 5a fällt, d.h. $\delta \leq$ MFD/2. In diesem Fall wird ein deutlicher Kontrastverlust beobachtet, siehe Fig. 6.

Es sind viele unterschiedliche Realisierungsmöglichkeiten für das in den Figuren 5 und 7 bis 10 dargestellte Fabry-Perot Interferometer 200 denkbar. In allen Ausführungsbeispielen kann das Ende des Lichtleiters 5 über eine Faserferrule oder einen Halter 8 und ein Gehäuse 9 fest mit dem Kollimator 6 verbunden sein. Dadurch wird ein stabiler und robuster Aufbau des Interferometerkopfes bestehend aus dem ersten Resonatorspiegel 1 (hier Austrittsfläche des Kerns 5a), dem zweiten Resonatorspiegel 2 (hier Endfläche des Mantels 5b) und dem Kollimator 6 erreicht. Der Abstand L zwischen dem Ende des Lichtleiters 5 und dem Faltungsspiegel 7 ist lediglich durch konstruktive Beschränkungen begrenzt, und kann bei einem gegebenen Winkel $\alpha$ durch eine Vergrößerung des Durchmessers des Kollimators 6 und/oder durch eine Vergrößerung des Durchmessers D des Mantels 5b nahezu beliebig vergrößert werden. Ohne Weiteres sind Messbereiche von mehr als 1 cm oder sogar 10 cm und mehr möglich. Dabei kann bei der Translationsbewegung des Faltungsspiegels 7 eine Änderung des Verkippungswinkels $\alpha$ z.B. aufgrund von Vibrationen oder der Translationsbewegung selbst hingenommen werden, solange die Bedingung MFD/2 < $\delta$ < D/2 erfüllt bleibt. Dies ermöglicht eine Verwendung des konfokalen Fabry-Perot Interferometers 200 in vielfältigen Einsatzgebieten.

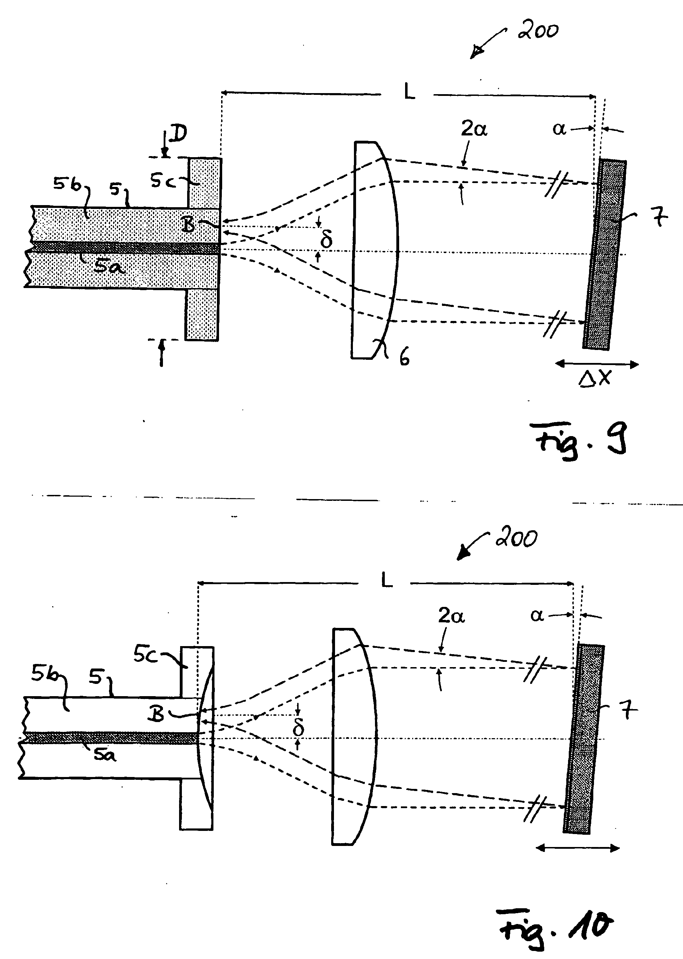

Die Figuren 9 und 10 zeigen weitere Variationen des Fabry-Perot Interferometers 200. Die Faserferrule 8 und das optionale Gehäuse 9 sind in den Figuren 9 und 10 nicht dargestellt. Nach Fig. 9 kann der wirksame Durchmesser D des Mantels 5b durch ein optisches Teil, z.B. ein Ringstück 5c vergrößert werden. Das optische Ringstück 5c kann aus demselben Material wie der Mantel 5b gefertigt sein und eine Ringoberfläche aufweisen, die koplanar mit der Endfläche des Mantels 5b ist. Das Ringstück 5c vergrößert somit die Reflexionsfläche des zweiten Resonatorspiegels 2, d.h. die Fläche, die für die Reflexion des Bildpunktes B zur Verfügung steht. Auf diese Weise wird die maximal zulässige Verkippung $\alpha_{max}$ = D/(4f) weiter vergrößert.

In den bisherigen Ausführungsbeispielen wurden beispielsweise ebene Spiegel 1, 2, 7 betrachtet. Gemäß Fig. 10 kann die Endfläche des zweiten Resonatorspiegels 2 (d.h. hier des Mantels 5b sowie auch die daran angrenzende Oberfläche des Ringstücks 5c, sofern vorhanden) mit einer sphärischen Formgebung bzw. Ausnehmung versehen sein. Dadurch wird die optische Abbildungsgenauigkeit der Konfokaloptik und damit die optischen Eigenschaften des Fabry-Perot Interferometers 200 verbessert. Es können auch beide Resonatorspiegel 1, 2 eine gekrümmte Formgebung aufweisen.

Eine weitere, nicht dargestellte Ausführungsvariante des konfokalen Fabry-Perot Interferometers 200 kennzeichnet sich dadurch, dass der erste und/oder der zweite Resonatorspiegel 1, 2 nicht integral mit dem Lichtleiter 5 sind, sondern als ein oder mehrere separate optische Elemente realisiert sind. Beispielsweise können der erste und der zweite Resonatorspiegel 1, 2 durch eine oder mehrere teildurchlässige Spiegelscheiben realisiert sein, welche im Strahlengang vor dem Kollimator 6 angeordnet ist bzw. sind und von dem aus dem Lichtleiter 5 austretenden Messlicht durchlaufen wird bzw. werden. Eine radial innere und eine radial äußere Zone dieser Spiegelscheibe (oder zwei getrennte entsprechende Spiegelelemente) können den ersten bzw. den zweiten Resonatorspiegel 1, 2 bilden und beispielsweise unterschiedlich stark verspiegelt sein (insbesondere dann, wenn der Reflexionsgrad $R_c$ des Faltungsspiegels kleiner als 100% ist, kann der Reflexionsgrad des zweiten Resonatorspiegels 2 höher als der des ersten sein). Ferner ist auch möglich, dass der Interferometer-Resonator durch geeignete Maßnahmen nicht nur zweifach (hin und zurück), sondern 4-fach, 6-fach usw. durchlaufen wird, wobei jeweils eine Messgenauigkeitserhöhung um den Faktor der Lichtwegverlängerung im Resonator auftritt.

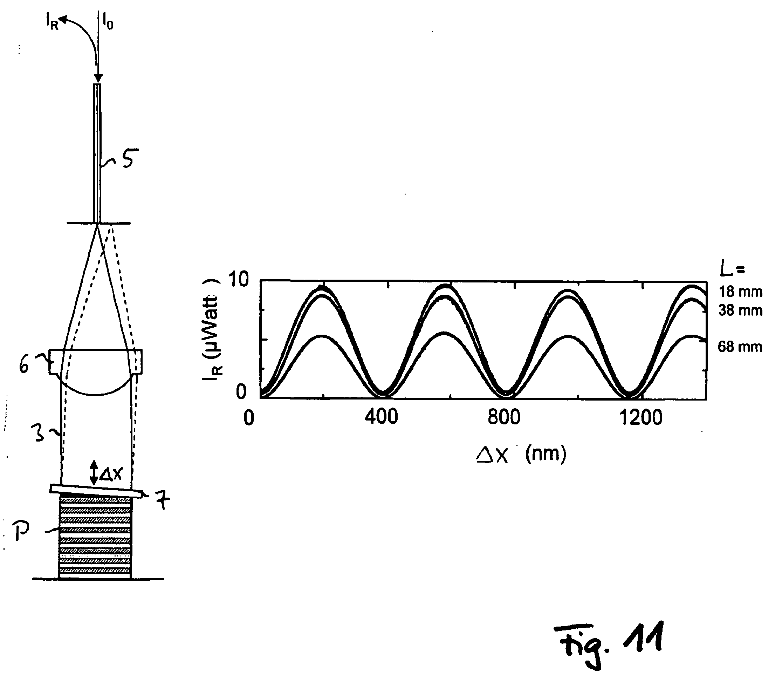

Fig. 11 zeigt im rechten Bereich ein Diagramm, in welchem die Intensität $I_R$ des reflektierten Lichts 4 in Einheiten von $\mu$ Watt gegenüber einer Wegstreckenänderung $\Delta x$ in Einheiten von nm dargestellt ist. Es sind drei Messkurven für L = 18 mm, L = 38 mm und L = 68 mm dargestellt. Das Messlicht der Intensität $I_0$ wurde mit einem Laser der Wellenlänge $\lambda$ = 1550 nm erzeugt. Die Brennweite des Kollimators 6 betrug f = 8 mm und das von dem Kollimator 6 erzeugte Lichtbündel 3 besaß einen Durchmesser von 1,5 mm. Die Wegverschiebung $\Delta x$ des Faltungsspiegels 7 wurde durch einen Piezostapel P herbeigeführt. Die Messkurven in Fig. 11 zeigen, dass bei den hier verwendeten Reflexionsgraden der Spiegel ($R_1 = R_2 = 0,04$, $R_c$ nahezu 1) kosinusförmige $I_R$-Kurven erhalten werden und der Kontrast stets bei nahezu 100% liegt, wobei die Amplitude mit steigendem Abstand L zwischen dem Ende des Lichtleiters 5 und dem Faltungsspiegel 7 (d.h. dem Objekt) abnimmt. Eine grobe Bestimmung der Objektposition kann daher bereits anhand der Amplitude $I_R$ des von dem Fabry-Perot Interferometer 200 reflektierten Lichts 4 vorgenommen werden.

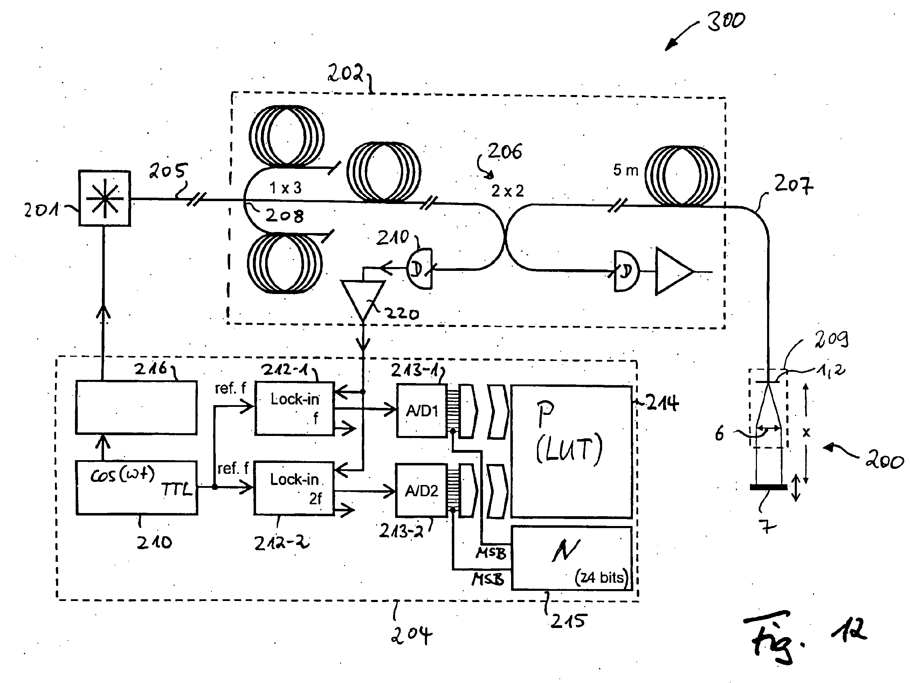

Fig. 12 zeigt in beispielhafter Weise eine Positionserfassungseinrichtung 300, die das von einem erfindungsgemäßen Fabry-Perot Interferometer 100, 200 reflektierte Licht 4 zur Bestimmung der Objektposition x nutzt. Die hier gezeigte Positionserfassungseinrichtung 300 arbeitet auf dem Prinzip der Quadraturdetektion, welche in der europäischen Patentanmeldung EP 2 045 572 A1 näher erläutert ist, die hiermit durch Bezugnahme dem Inhalt der vorliegenden Anmeldung hinzugefügt wird.

Die Intensität des reflektierten Lichtes $I_R$ ist proportional zu dem Reflexionsgrad des Fabry-Perot Interferometers, der unter der (optionalen) Annahme eines Reflexionsgrades des Faltungsspiegels 7 von $R_c$ = 1,0 (100%) allgemein durch den Ausdruck

$$\text{Reflexionsgrad} = \frac{R_{min} + g^2 \sin^2 \Phi}{1 + g^2 \sin^2 \Phi} \qquad (4)$$

mit $\Phi = k(P+1)x$ mit $k = \dfrac{2\pi}{\lambda}$ , P = Faltungsgrad (P=0 <-> keine Faltung, P=1 <-> ein Faltungsspiegel, u.s.w.) und $g^2$ =$4R/(1-R)^2$ gegeben ist. Dabei bezeichnet R den effektive Reflexionsgrad, der sich aus dem Reflexionsgrad $R_1$ des Spiegels 1 und dem Reflexionsgrad $R_2$ des Spiegels 2 nach $R = (R_1 R_2)^{1/2}$ ergibt.

Die Finesse F ist durch $F = (ng/2)^{1/2}$ bestimmt.

Für den Spezialfall $R_1 = R_2 = R$ ergibt sich

$$\text{Reflexionsgrad} = \frac{g^2 \sin^2 \Phi}{1 + g^2 \sin^2 \Phi} . \qquad (5)$$

Sofern $g^2 \ll 1$ gilt, kann der Nenner in erster Näherung ignoriert werden und die Reflexionsgrad des Fabry-Perot Interferometers erfüllt die folgende Proportionalität

$$\text{Reflexionsgrad} \cong g^2 \sin^2 \Phi, \quad (g^2 \ll 1) \qquad (6)$$

was äquivalent ist zu

$$\text{Reflexionsgrad} \cong g^2(1 - \cos 2\Phi)/2 . \qquad (7)$$

Die Intensität $I_R$ des reflektierten Lichts 4 ist daher für $R_1 = R_2 = R$ und kleine Werte von R ein Signal mit einem variierenden Anteil $\cos(2(P+1)kx)$ mit $k = 2\pi/\lambda$ und P = Faltungsgrad (P=0 <-> keine Faltung, P=1 <-> 1 Faltungsspiegel, u.s.w.), siehe z.B. Fig. 11. Ein solches Signal ist - wie noch später erläutert wird - für eine Auswertung gut geeignet.

Die Finesse F des Fabry-Perot Interferometers kann beispielsweise kleiner als 10,0, 5,0, 1,0 oder 0,5 sein. Je höher der Wert der Finesse F, desto schwieriger wird eine auf der Auswertung der Kurvenform beruhende Signalauswertung, da die Kosinusform gemäß Gleichung (7) dann nicht mehr eingehalten wird.

Um eine geringe Finesse F zu erreichen, kann wenigstens einer der Spiegel 1, 2, 7 einen geringen Reflexionsgrad aufweisen. Typischerweise liegt der Reflexionsgrad eines ebenen polierten Endes eines Lichtleiters 5 sowohl im Bereich des Kern 5a als auch im Bereich des Mantels 5b bei etwa 4% und weist somit die gewünschte niedrige Reflexivität auf.

Es wird darauf hingewiesen, dass die Reflexivitätsgrade der Resonatorspiegel 1, 2 und des Faltungsspiegels 7 auch anders aufeinander abgestimmt sein können. Ein hoher Kontrast des Interferenzmusters im reflektierten Licht, d.h. $R_{min} = 0$, sollte dabei stets angestrebt werden, wobei jedoch bei $R_c \neq 100\%$ und insbesondere bei kleinen Werten für $R_c$ diese Bedingung bei (gegebenenfalls sehr) unterschiedlichen Werten von $R_1$ und $R_2$ erfüllt ist. Insofern kann beispielsweise vorgesehen sein, dass die Austrittsfläche des Kerns 5a (oder eines vom Lichtleiter 5 separierten ersten Resonatorspiegels 1) und die Stirnfläche des Mantels 5b (oder eines vom Lichtleiter 5 separierten zweiten Resonatorspiegels 2) unterschiedliche Reflexionsgrade aufweisen, d.h. unterschiedlich stark verspiegelt sind. Ferner kann statt einer kleinen Finesse F auch eine große Finesse des Fabry-Perot Interferometers 200 gewünscht sein, beispielsweise dann, wenn die Auswertung der Intensität $I_R$ nicht auf der Kosinusform des Intensitätsverlaufs beruht. Dies kann beispielsweise der Fall sein, wenn keine hohe Ortsauflösung benötigt wird und zur Auswertung des reflektierten Lichtes z.B. lediglich die Periodizität des Interferenzmusters, nicht jedoch der Kurvenverlauf zwischen Periodizitätsbezugspunkten (z.B. Maxima) von $I_R$ herangezogen wird.

Die Positionserfassungseinrichtung 300 umfasst einen Interferometerkopf 209, eine Detektoranordnung 202, eine Auswerteschaltung 204 und eine Lichtquelle (Laser) 201. Im folgenden werden spezielle Beispiele für diese Komponenten angegeben.

Die Detektoranordnung 202 kann beispielsweise eingangsseitig einen 1×M Koppler 208 aufweisen, welcher M unabhängige Laserausgänge bereitstellt. Wird beispielsweise eine Überwachung der Objektbewegung in drei Dimensionen durchgeführt, kann M = 3 gewählt werden. An den beiden freien Ausgängen des 1×3 Kopplers 208 können in diesem Fall zwei weitere interferometrische Positionserfassungsvorrichtungen angeschlossen werden.

Einer der Ausgänge des 1×M Kopplers 208 wird einem 2×2 Koppler 206 zugeleitet. Der eine Ausgang des 2×2 Kopplers 206 wird über eine SMF (Single Mode Fiber) 207 in den Interferometerkopf 209 eingekoppelt. Der Interferometerkopf 209 kann z.B. durch einen der zuvor beschriebenen konfokalen Fabry-Perot Interferometerköpfe 100, 200 realisiert sein.

Das von dem Interferometerkopf 209 über die SMF 207 zurückgeleitete Interferenzlicht der Intensität $I_R$ wird einem Detektor 210 zugeleitet. Der Detektor 210 erzeugt ein Messsignal, das nach einer optionalen Verstärkung in einem Verstärker 220 der Auswerteschaltung 204 zugeleitet wird.

Für Anwendungsfälle, in denen keine hohen Genauigkeiten erforderlich sind, sind einfache Auswerteprozeduren möglich. Beispielsweise kann ein Laser 201 mit fester Wellenlänge eingesetzt werden und es kann ein Detektorsignal, das dem in Fig. 11 dargestellte Intensitätsverlauf $I_R$ entspricht oder auch nur dessen Periodizität aufweist, direkt ausgewertet werden. Neben der bereits angesprochenen Möglichkeit der Auswertung der Amplitude eines aus dem Intensitätsverlauf $I_R$ gewonnenen Detektorsignals mit geringer Genauigkeit der Ortsbestimmung besteht eine einfache Möglichkeit in der Auswertung der Kurvenperiodizität, z.B. durch Zählung von Kurvenmaxima (Genauigkeit ist $(\lambda/2)/(P+1)$ mit P = Faltungsgrad). Da es für eine Auswertung der Kurvenperiodizität nicht entscheidend auf die Kurvenform ankommt, können insbesondere in diesem Fall auch konfokale Fabry-Perot Interferometer mit einer höheren Finesse F eingesetzt werden, welche ein periodisches, aber nicht Kosinus-förmiges Detektorsignal liefern. Die Genauigkeit von $(\lambda/2)/(P+1)$ einer Auswertung (allein) der Kurvenperiodizität kann erhöht werden, wenn der Kurvenverlauf zwischen den Kurvenmaxima (oder anderer zur Ermittlung der Kurvenperiodizität verwendeter Bezugspunkte) zur Auswertung herangezogen wird. Dies kann beispielsweise durch einen Vergleich mit vorab z.B. in einem Nachschlage-Tabellenspeicher gespeicherten Kurvenwerten und/oder Interpolation durchgeführt werden.

Im Folgenden wird beispielhaft anhand Figur 12 eine Positionserfassungseinrichtung 300 beschrieben, die eine sehr genaue Positionsbestimmung auf der Basis einer sogenannten Quadratur-Detektionsmethode durchführt. Dabei wird als Lichtquelle ein durchstimmbarer Laser 201 verwendet, mit diesem eine periodische Wellenlängenmodulation des Messlichtes herbeigeführt und eine Auswertung der Intensität $I_R$ des von dem konfokalen Fabry-Perot Interferometer 100, 200 reflektierten Lichts nach dem Quadraturprinzip mittels Demodulation in Abhängigkeit von der Modulationsfrequenz des Messlichtes durchgeführt. Auf diese Weise kann eine Genauigkeit der Positionsbestimmung im Nanometerbereich und sogar im Sub-Nanometerbereich über den gesamten Messbereich erreicht werden.

Zum Verständnis der Quadratur-Detektionsmethode wird zunächst der mathematische Hintergrund kurz beschrieben. Das normierte Detektorsignal ist bei einem konfokalen Fabry-Perot Interferometer 100, 200 mit kleiner Finesse durch

$$s = \cos[2(P+1)kx] \,, \qquad\qquad (8)$$

gegeben, wobei k über k = $2\pi/\lambda$ mit der zeitlich variierenden Wellenlänge $\lambda$ des durchstimmbaren Lasers 201 in Beziehung steht. Die Modulation des Messlichtes kann durch

$$k = k_0 + \delta k \cos(\omega t) \qquad (9)$$

angegeben werden, wobei $k_0$ einen festen Wellenzahlwert und $\delta k$ den Modulationshub bezeichnen. Eine Herleitung, die in der Anmeldung EP 2 045 572 A1 beschrieben ist, ergibt, dass das normierte Messsignal s durch die Summe von Termen

$$s = s_{DC} + s_\omega + s_{2\omega} \qquad (10)$$

angegeben werden kann. Der Term $s_{DC}$ ist eine zeitunabhängige Komponente und ergibt sich zu

$$s_{DC} = \cos(2(P+1)k_0 x)[(1-(2(P+1)x\delta k/2)^2] + s_0 . \qquad (11)$$

Der zweite Term $s_\omega$ ist eine zeitabhängige Komponente, die eine periodische, zeitliche Oszillation mit der Modulationsfrequenz f gemäß

$$s_\omega = \{-2(P+1)x\delta k \cos(\omega t)\} \sin(2(P+1)k_0 x) \qquad (12)$$

vollzieht, wobei $\omega = 2\pi f$. Der dritte Term $s_{2\omega}$ ist ebenfalls eine zeitlich veränderliche Komponente, die eine periodische Oszillation mit der doppelten Modulationsfrequenz, d.h. 2f, darstellt

$$s_{2\omega} = \{-(2(P+1)x\delta k/2)^2 \cos(2\omega t)\} \cos(2(P+1)k_0 x) . \qquad (13)$$

Eine Quadratur-Auswertung kann beispielsweise dadurch erfolgen, dass die beiden zeitveränderlichen Komponenten $s_\omega$ und $s_{2\omega}$ mit der Frequenz f bzw. der Frequenz 2f demoduliert werden. Die durch die Demodulation gewonnenen demodulierten Signale sind proportional zu

$$S = -2(P+1)x\delta k \sin(2(P+1)k_0 x) \qquad (14)$$

und

$$S_Q = -(2(P+1)x\delta k/2)^2 \cos(2(P+1)k_0 x) . \qquad (15)$$

Die Vorfaktoren $2(P+1)x\delta k$ und $(2(P+1)x\delta k/2)^2$ der Signale S und $S_Q$ sind unbekannt, da sie von dem Objektort x, d.h. dem gesuchten Wert, abhängen.

Zunächst wird daher ein ungefährer Wert $x_{estim}$ für die Objektposition ermittelt. Anschließend kann eine höhere Genauigkeit durch eine Auswertung der Quadratur-Detektionssignale $S \approx -2(P+1)x_{estim}\delta k \sin(2(P+1)k_0 x)$ und $S_Q \approx -(2(P+1) x_{estim}\delta k/2)^2 \cos(2(P+1)k_0 x)$ durch eine Inkrementzählung und eine Interpolation erzielt werden. Unter Verwendung dieser Quadratur-Detektion-demodulierten Terme ergibt sich die Position x mit einer hohen Genauigkeit, die im Sub-Nanometerbereich liegen kann, zu

$$x = \frac{\lambda}{2(P+1)}\left[N + \frac{1}{4} + \frac{1}{2\pi}\arccos\left(\frac{S}{\sqrt{S^2 + (2S_Q/2(P+1)x_{estim}\delta k)^2}}\right)\right] \quad . \tag{16}$$

Dabei bezeichnet N den Zählwert der Inkremente von $\lambda/[8(P+1)]$, der während einer Verschiebung x von einem Bezugspunkt (Nullpunkt) $x_0$ erhalten wurde.

Die Ermittlung des ungefähren Werts $x_{estim}$ kann beispielsweise Durch Messung der Maximalwerte $max(S_Q)$ und $max(S)$ der Signale $S_Q$ und S nach der Gleichung $x_{estim} \approx (2/\delta k)(max(S_Q)/max(S))$ erfolgen.

Eine solche Auswertung des von dem Detektor 220 gelieferten Detektorsignals kann mittels der in Fig. 12 beispielhaft dargestellten Auswerteschaltung 204 durchgeführt werden. Diese umfasst einen ersten Lock-in Verstärker 212-1 und einen zweiten Lock-in Verstärker 212-2, einen ersten Analog/DigitalWandler 213-1, einen zweiten Analog/Digital-Wandler 213-2, einen Prozessor 214 mit Zugriff auf einen Nachschlag-Tabellenspeicher und einen Aufwärts-/Abwärts-Zähler 215. Zusätzlich umfasst die Auswerteschaltung 204 einen Laser-Treiber 216, der über einen Signalausgang eines Wechselspannungs-Generators 210 angesteuert wird. Der Laser-Treiber 216 kann eine Temperatursteuerung des abstimmbaren Lasers 201 vornehmen und bewirkt, dass der abstimmbare Laser 201 mit hoher Genauigkeit eine Wellenlängen-Modulation gemäß $\lambda = \lambda_0 \, \delta\lambda\cos((\omega t)$ durchführt. Der abstimmbare Laser 201 kann beispielsweise ein DFB (Distributed Feedback) Laser sein, der z.B. mit einer Zentralfrequenz bei 1500 nm arbeitet. Der Laser 201 kann durch Verwendung eines Faraday-Isolators z.B. mit 35 db isoliert sein, um zu vermeiden, dass er durch reflektiertes Licht beschädigt oder instabil wird.

Die Demodulationen des von dem Detektor 220 ausgegebenen Messsignals mit der Winkelfrequenz $\omega$ und der Winkelfrequenz $2\omega$ werden in den Lock-in Verstärkern 212-1 bzw. 212-2 durchgeführt. Zu diesem Zweck sind die Referenzeingänge der beiden Lock-in Verstärker 212-1, 212-2 mit einem TTL Referenzausgang des Wechselspannungsgenerators 210 verbunden. Das am Ausgang des Detektors 220 ausgegebene Messsignal wird in die Signaleingänge der beiden Lock-in Verstärker 212-1 und 212-2 eingespeist. Der erste Lock-in Verstärker 212-1 wird auf die Referenzwinkelfrequenz $\omega$ und der zweite Lock-in Verstärker 212-2 wird auf die doppelte Referenzwinkelfrequenz $2\omega$ eingestellt. Der synchron mit $\omega$ betriebene erste Lock-in Verstärker 212-1 erzeugt ein demoduliertes Signal $S = -x\delta k \sin(2(P+1)k_0 x)$ und der synchron zu der Winkelfrequenz $2\omega$ arbeitende zweite Lock-in Verstärker 212-2 liefert ein Quadratur-Detektionssignal $S_Q = -(2(P+1)x\delta k/2)^2 \cos(2(P+1)k_0 x)$. Unter der optionalen Bedingung $\delta\lambda \ll \lambda_0$ kann der Faktor $\delta k$ durch den Ausdruck $\delta k = -2\pi\delta\lambda/(\lambda_0)^2$ approximiert werden, wobei $\delta\lambda$ den bekannten Wellenlängenhub der Wellenlängenmodulation angibt. Die beiden Ausgangssignale der Lock-in Verstärker 212-1, 212-2 werden von den Analog/Digital-Wandlern 213-1, 213-2 in digitale Signale gewandelt. Eine erste Auslesung am Ausgang der Analog/Digital-Wandler 213-1, 213-2 ergibt den Verschiebeweg x in Inkrementen von $\lambda/[8(P+1)]$. Zu diesem Zweck wird jeweils das höchstwertigste Bit MSB (Most Significant Bit) am Ausgang jedes Analog/Digital-Wandlers einem Zähleingang des Aufwärts-/Abwärts-Zählers zugeleitet. Die Position x wird durch das nächstliegendste Inkrement $X_N$ nach

$$x_N = \frac{\lambda}{2(P+1)}\left(N + \frac{1}{4}\right) \tag{17}$$

ermittelt. Beispielsweise kann als Zähler 215 ein 24-Bit-Zähler mit zwei Zähleingängen verwendet werden.

Für die Berechnung von $\delta x$ innerhalb eines Inkrements $\lambda/8$ wird eine zweite Auslesung der Ausgänge der Analog/Digital-Wandler 213-1, 213-2 von dem Prozessor 214 vorgenommen. Diese zweite Auslesung kann sich über die gesamte Wortbreite der Wandlerausgänge erstrecken. Ein in dem Prozessor 214 enthaltener Interpolator bearbeitet die beiden demodulierten Signale S und $S_Q$ und bestimmt $\delta x$ gemäß der folgenden Beziehung:

$$\delta x = \frac{\lambda}{4\pi(P+1)}\arccos\left(\frac{S}{\sqrt{S^2 + (2S_Q/(2(P+1)x_{estim}\delta k)^2}}\right) \tag{18}$$

Der Wert x wird dann durch die Summe des Ausgangs des Aufwärts-/Abwärts-Zählers 215 und des Interpolators im Prozessor 214 gemäß

$$x = x_N + \delta x \qquad\qquad (19)$$

ermittelt. Die Interpolation kann beispielsweise anhand eines Nachschlage-Tabellenspeichers (LUT) erfolgen.

Es wird darauf hingewiesen dass die Quadratur-Detektionsmethode nicht notwendigerweise auf der Basis der Signalkomponenten $S_\omega$ und $S_{2\omega}$, sondern beispielsweise auch anhand der Gleichkomponente $S_{DC}$ und einer der Signalkomponenten $S\omega$ oder $S_{2\omega}$ durchführt werden kann. Denn die Gleichkomponente $S_{DC}$ ist ebenfalls von x abhängig. In diesem Fall kann einer der Lock-in Verstärker 212-1, 212-2 entfallen. Die Quadratur-Detektionsmethode beruht jedoch immer auf einer Auswertung von zumindest zwei Signalkomponenten.

Die Positionserfassungseinrichtung kann aufgrund ihrer Vielzahl von günstigen Eigenschaften (hohe Auflösung, großer Messbereich, Kompaktheit des Interferometerkopfes (bauliche Abmessungen kleiner als 1 cm, Gewicht kleiner als 1 g), einfacher Einbau, minimaler oder kein optischer Justageaufwand, hohe Vibrationsfestigkeit da keine steifen Verbindungsleitungen erforderlich) in vielen Anwendungen und Einbauumgebungen zum Einsatz kommen. Insbesondere ist ein Einsatz in extremen Umgebungen (LT, UHV, B, KV, T ...) möglich.

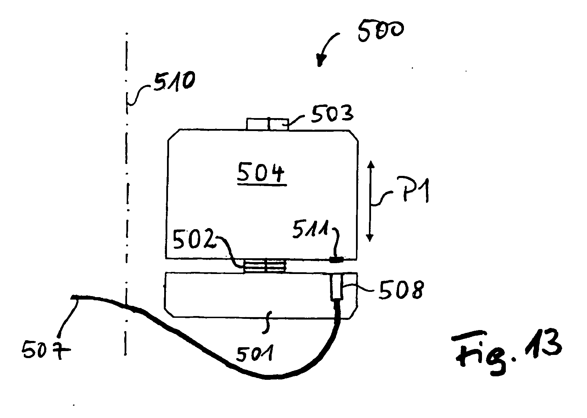

Beispielsweise kann die Positionserfassungseinrichtung zur Überwachung der Positionierbewegung eines Positionierers mit einer Positioniergenauigkeit im Sub-Millimeter-Bereich oder im Sub-Mikrometer-Bereich oder im Nanometerbereich und sogar Sub-Nanometerbereich eingesetzt werden. In Fig. 13 ist in Draufsicht ein Ausführungsbeispiels eines Positionierers 500 für Translationsbewegungen mit einer erfindungsgemäßen Positionserfassungseinrichtung dargestellt. Der Positionierer 500 weist ein erstes, lagefestes Teil 501 und ein gegenüber dem ersten Teil 501 verschiebliches zweites Teil auf, welches nachfolgend als Träger 504 bezeichnet wird. Zwischen dem ersten Teil 501 und dem Träger 504 wirkt eine Relativlage-Verstelleinrichtung, die z.B. durch eine Translationsachse 503, auf welcher der Träger 504 gleiten kann, und ein als Aktuator wirkendes Piezoelement 502 realisiert sein kann. Die Richtung der Translationsbewegung wird durch einen Doppelpfeil P1 veranschaulicht.

Der hier dargestellte Antrieb wird als sogenannter Trägheitsmotor oder auch als Slip-Stick-Antrieb bezeichnet. Bei Slip-Stick-Antrieben, aber auch bei anderen Konstruktionstypen, ist die Schrittweite einer Positionierbewegung nicht exakt über die Ansteuerung des Antriebs definierbar. Dies bedeutet, dass eine Lagebestimmung eines auf dem Träger 504 angeordneten Positionierteils im Positionierer 500 nicht allein anhand einer Überwachung der Antriebssteuerung (z.B. einer Schrittzählung) durchgeführt werden kann, sondern dass der Positionierer 500 zusätzlich mit einer Vorrichtung ausgerüstet sein muss, welche eine Überwachung der Positionierlage ermöglicht.

Zu diesem Zweck ist eine Positionserfassungseinrichtung gemäß einem der vorhergehenden Ausführungsbeispiele vorgesehen. An dem lagefesten ersten Teil 501 ist ein Interferometerkopf 509 gehalten, der gemäß einem der vorhergehenden Ausführungsbeispiele ausgeführt sein kann. Das aus dem Interferometerkopf 509 austretende Beleuchtungslicht fällt auf einen an dem verschieblichen Träger 504 angebrachten Spiegel 511, welcher senkrecht zur Bewegungsrechtung (Doppelpfeil P1) orientiert ist und das Licht zum Interferometerkopf 503 zurück reflektiert. Der Spiegel 511 kann beispielsweise der Faltungsspiegel 7 oder, im Fall des in Fig. 4 gezeigten Fabry-Perot Interferometers 100 auch der zweite Resonatorspiegel 2 sein. Der Interferometerkopf 503 ist über eine optische Faser 507 mit einer Detektoranordnung (nicht dargestellt) verbunden, die gemäß einem der vorhergehenden Ausführungsbeispiele ausgeführt sein kann und mit den weiteren zuvor beschriebenen Komponenten (Laser, Auswerteschaltung) in Verbindung steht.

Die strichpunktierte Linie 510 repräsentiert eine Systemgrenze, wie sie beispielsweise durch eine Wandung eines Kryostaten oder eines anderen Behältnisses realisiert sein kann. Es wird deutlich, dass lediglich der Interferometerkopf 508 (ohne Detektorelemente) innerhalb des abgeschlossenen Systems untergebracht sein muss und - wie in Fig. 13 dargestellt - optional auch in einem Positionierer 500 integriert sein kann. Daher ist der Interferometerkopf 508 bzw. der mit dem Interferometerkopf 508 ausgerüstete Positionierer 500 in Extremumgebungen wie beispielsweise Tieftemperatur, Ultrahochvakuum (UHV) oder hohe elektrische oder magnetische Felder einsetzbar, in denen die Funktionsfähigkeit bekannter Positionserfassungseinrichtungen onserfassungseinrichtungen und/oder Positionierer häufig nicht in der gewünschten Weise erhalten bleibt.

Bei dem Translations-Positionierer 500 kann eine optische Auflösung von etwa 1 nm oder sogar darunter erreicht werden. Die Schrittgröße ist in Abhängigkeit von der Spannung zur Ansteuerung des Piezoelementes 502 und in Abhängigkeit von der Temperatur zwischen etwa 5 nm und 1 $\mu$m variierbar. Aufgrund der hohen Auflösung der optischen Positionsüberwachung kann also eine Positioniergenauigkeit im Bereich der mechanischen Grenzen des Antriebs (etwa 5 nm) erreicht werden. Besonders vorteilhaft für viele Anwendungen ist der lange maximale Bewegungsweg, der in der Regel mehrere Millimeter bis hin zu ein oder mehreren Zentimetern betragen kann.

**Patentansprüche**

1. Vorrichtung zur Positionserfassung, mit

einem konfokalen Fabry-Perot Interferometer (100, 200), das einen ersten und einen zweiten Resonatorspiegel (1, 2) und einen im Strahlengang zwischen dem ersten und dem zweiten Resonatorspiegel (1, 2) angeordneten Faltungsspiegel (7) umfasst,

wobei der Faltungsspiegel (7) dazu ausgebildet ist, mit einem Objekt, dessen Position zu bestimmen ist, mechanisch gekoppelt zu sein, und

der Faltungsspiegel (7) so orientiert ist, dass er den Strahlengang im Fabry-Perot Interferometer (200) vom ersten (1) auf den zweiten (2) Resonatorspiegel und vom zweiten (2) auf den ersten (1) Resonatorspiegel lenkt.

2. Vorrichtung nach Anspruch 1, wobei das konfokale Fabry-Perot Interferometer (100, 200) einen im Strahlengang zwischen dem ersten und dem zweiten Resonatorspiegel (1, 2) angeordneten Kollimator (6, 6') umfasst.

3. Vorrichtung nach einem der vorhergehenden Ansprüche, wobei der Faltungsspiegel (7) einen Reflexionsgrad größer als 0,9, insbesondere größer als 0,95, aufweist.

4. Vorrichtung nach einem der vorhergehenden Ansprüche, wobei der erste und der zweite Resonatorspiegel (1, 2) in Bezug auf eine optische Achse des Fabry-Perot Interferometers (200) radial versetzt zueinander angeordnet sind.

5. Vorrichtung nach einem der vorhergehenden Ansprüche, wobei der erste und der zweite Resonatorspiegel (1, 2) relativ zueinander lagefest angeordnet sind.

6. Vorrichtung nach einem der vorhergehenden Ansprüche, wobei die Finesse des Fabry-Perot Interferometers (100, 200) kleiner als 1,0, insbesondere kleiner als 0,5, ist.

7. Vorrichtung nach einem der vorhergehenden Ansprüche, wobei der Reflexionsgrad des ersten Resonatorspiegels (1) kleiner als 0,15, insbesondere kleiner als 0,07 ist und der Reflexionsgrad des zweiten Resonatorspiegels (2) kleiner als 0,15, insbesondere kleiner als 0,07 ist.

8. Vorrichtung nach einem der vorhergehenden Ansprüche, wobei der Reflexionsgrad des ersten Resonatorspiegels (1) und der Reflexionsgrad des zweiten Resonatorspiegels (2) in etwa gleich groß sind.

9. Vorrichtung nach einem der vorhergehenden Ansprüche, wobei der erste Resonatorspiegel (1) die Austrittsfläche eines Kerns (5a) eines Lichtleiters (5) umfasst.

10. Vorrichtung nach einem der vorhergehenden Ansprüche, wobei der zweite Resonatorspiegel (2) eine Endfläche eines seitlich neben dem ersten Resonatorspiegel angeordneten optischen Teils, insbesondere des Mantels (5b) eines Lichtleiters (5) umfasst.

11. Vorrichtung nach einem der vorhergehenden Ansprüche, mit einer Lichtquelle (201) zur Erzeugung eines dem Fabry-Perot Interferometer (100, 200) zugeführten Messlichtes,

einem Detektor (210) zur Erzeugung eines Messsignals in Abhängigkeit von einem mittels des Fabry-Perot Interferometers (100, 200) erzeugten Interferenzmusters, und

einer Auswerteschaltung (204) zur Auswertung des Messsignals.

12. Vorrichtung nach einem der vorhergehenden Ansprüche, wobei die Vorrichtung ausgelegt ist, eine Wegmessung über einen Messbereich von mehr als $10^{-4}$ m, insbesondere mehr als $10^{-3}$ m, noch insbesondere mehr als $10^{-2}$ m durchzuführen.

13. Anordnung aus einem Positionierer und einer Vorrichtung zur Positionserfassung, welche umfasst:

den Positionierer (500) und eine Vorrichtung zur Positionserfassung (100, 200, 300) gemäß einem der vorhergehenden Ansprüche.

14. Verfahren zur Positionsbestimmung, mit den Schritten:

Erzeugen eines von der Position eines Objektes abhängigen Interferenzmusters mittels eines konfokalen Fabry-Perot Interferometers (100, 200), das einen ersten und einen zweiten Resonatorspiegel (1, 2) und einen im Strahlengang zwischen dem ersten und dem zweiten Resonatorspiegel (1, 2) angeordneten Faltungsspiegel (7) umfasst, wobei der Faltungsspiegel (7) mit einem Objekt, dessen Position zu bestimmen ist, mechanisch gekoppelt ist, und wobei der Faltungsspiegel (7) so orientiert ist, dass er den Strahlengang im Fabry-Perot Interferometer (200) vom ersten (1) auf den zweiten (2) Resonatorspiegel und vom zweiten (2) auf den ersten (1) Resonatorspiegel lenkt;

Detektieren des Interferenzmusters; und

Auswerten eines durch die Detektion erhaltenen Messsignals zur Bestimmung der Objektposition.

**Claims**

1.  Device for detecting position, having a confocal Fabry-Perot interferometer (100, 200) which comprises a first and a second resonator mirror (1, 2) and a folding mirror (7) arranged in the beam path between the first and the second resonator mirror (1, 2), in which the folding mirror (7) is designed to be mechanically coupled to an object whose position is to be determined, and in which the folding mirror (7) is orientated such that it directs the beam path in the Fabry-Perot interferometer (200) from the first (1) to the second (2) resonator mirror and from the second (2) to the first (1) resonator mirror.

2.  Device according to Claim 1, in which the confocal Fabry-Perot interferometer (100, 200) comprises a collimator (6, 6') arranged in the beam path between the first and the second resonator mirrors (1, 2).

3.  Device according to one of the preceding claims, in which the folding mirror (7) has a reflectivity greater than 0.9, in particular greater than 0.95.

4.  Device according to one of the preceding claims, in which the first and the second resonator mirrors (1, 2) are arranged radially offset from one another with reference to an optical axis of the Fabry-Perot interferometer (200).

5.  Device according to one of the preceding claims, in which the first and the second resonator mirrors (1, 2) are arranged fixedly with reference to one another.

6.  Device according to one of the preceding claims, in which the finesse of the Fabry-Perot interferometer (100, 200) is smaller than 1.0, in particular smaller than 0.5.

7.  Device according to one of the preceding claims, in which the reflectivity of the first resonator mirror (1) is smaller than 0.15, in particular smaller than 0.07, and the reflectivity of the second resonator mirror (2) is smaller than 0.15, in particular smaller than 0.07.

8.  Device according to one of the preceding claims, in which the reflectivity of the first resonator mirror (1) and the reflectivity of the second resonator mirror (2) are approximately equally large.

9.  Device according to one of the preceding claims, in which the first resonator mirror (1) comprises the exit surface of a core (5a) of a light guide (5).

10. Device according to one of the preceding claims, in which the second resonator mirror (2) comprises an end face of an optical part arranged laterally next to the first resonator mirror, in particular the cladding (5b) of a light guide (5).

11. Device according to one of the preceding claims, having a light source (201) for producing a measuring light fed to the Fabry-Perot interferometer (100, 200), a detector (210) for producing a measurement signal as a function of an interference pattern produced by means of the Fabry-Perot interferometer (100, 200), and an evaluation circuit (204) for evaluating the measurement signal.

12. Device according to one of the preceding claims, in which the device is designed to carry out a position measurement over a measuring range of more than $10^{-4}$ m, in particular more than $10^{-3}$ m, furthermore in particular more than $10^{-2}$ m.

13. Arrangement composed of a positioner and a device for detecting position, which comprises:

    the positioner (500) and a device for detecting position (100, 200, 300) in accordance with one of the preceding claims.

14. Method for determining position, having the steps of:

producing an interference pattern dependent on the position of an object by means of a confocal Fabry-Perot interferometer (100, 200) which comprises a first and a second resonator mirror (1, 2) and a folding mirror (7) arranged in the beam path between the first and the second resonator mirror (1, 2), the folding mirror (7) being mechanically coupled to an object whose position is to be determined, and the folding mirror (7) being orientated such that it directs the beam path in the Fabry-Perot interferometer (200) from the first (1) to the second (2) resonator mirror and from the second (2) to the first (1) resonator mirror;

detecting the interference pattern; and

evaluating a measurement signal obtained by the detection in order to determine the object position.

**Revendications**

1. Dispositif de détection de position présentant un interféromètre confocal de Fabry-Perot (100, 200) qui comporte un premier et un deuxième miroir (1, 2) de résonateur et un miroir de convolution (7) disposé dans le parcours des rayons entre le premier et le deuxième miroir (1, 2) de résonateur,
   le miroir de convolution (7) étant configuré pour être accouplé mécaniquement à un objet dont la position doit être définie et
   le miroir de convolution (7) étant orienté de telle sorte qu'il dévie le parcours des rayons de l'interféromètre de Fabry-Perot (200) du premier miroir de résonateur (1) sur le deuxième miroir (2) de résonateur et du deuxième miroir (2) de résonateur sur le premier miroir (1) de résonateur.

2. Dispositif selon la revendication 1, dans lequel l'interféromètre confocal de Fabry-Perot (100, 200) comporte un collimateur (6, 6') disposé dans le parcours des rayons entre le premier et le deuxième miroir (1, 2) de résonateur.

3. Dispositif selon l'une des revendications précédentes, dans lequel le miroir de convolution (7) présente un degré de réflexion supérieur à 0,9 et en particulier supérieur à 0,95.

4. Dispositif selon l'une des revendications précédentes, dans lequel le premier et le deuxième miroir (1, 2) de résonateur sont disposés en décalage radial mutuel par rapport à un axe optique de l'interféromètre de Fabry-Perot (200).

5. Dispositif selon l'une des revendications précédentes, dans lequel le premier et le deuxième miroir (1, 2) de résonateur sont disposés en position fixe l'un par rapport à l'autre.

6. Dispositif selon l'une des revendications précédentes, dans lequel la finesse de l'interféromètre de Fabry-Perot (100, 200) est inférieure à 1,0 et en particulier inférieure à 0,5.

7. Dispositif selon l'une des revendications précédentes, dans lequel le degré de réflexion du premier miroir (1) de résonateur est inférieur à 0,15 et en particulier inférieur à 0,07 et le degré de réflexion du deuxième miroir (2) de résonateur est inférieur à 0,15 et en particulier inférieur à 0,07.

8. Dispositif selon l'une des revendications précédentes, dans lequel le degré de réflexion du premier miroir (1) de résonateur et le degré de réflexion du deuxième miroir (2) de résonateur sont sensiblement de même niveau.

9. Dispositif selon l'une des revendications précédentes, dans lequel le premier miroir (1) de résonateur comporte la surface de sortie de l'âme (5a) d'un conducteur (5) de lumière.

10. Dispositif selon l'une des revendications précédentes, dans lequel le deuxième miroir (2) de résonateur comporte une surface d'extrémité d'une partie optique disposée latéralement à côté du premier miroir de résonateur, notamment l'enveloppe (5b) d'un conducteur (5) de lumière.

11. Dispositif selon l'une des revendications précédentes, présentant une source (201) de lumière qui émet une lumière de mesure amenée à l'interféromètre de Fabry-Perot (100, 200), un détecteur (210) qui forme un signal de mesure qui dépend d'un motif d'interférence formé au moyen de l'interféromètre de Fabry-Perot (100, 200) et un circuit d'évaluation (204) qui évalue le signal de mesure.

12. Dispositif selon l'une des revendications précédentes, conçu pour exécuter une mesure de distance dans une plage de mesure supérieure à $10^{-4}$ m, en particulier supérieure à $10^{-3}$ m et de manière encore plus particulière supérieure à $10^{-2}$ m.

**13.** Ensemble constitué d'un positionneur et d'un dispositif de détection de position qui comporte le positionneur (500) et un dispositif (100, 200, 300) de détection de position selon l'une des revendications précédentes.

**14.** Procédé de détermination de position comportant les étapes qui consistent à :

former un motif d'interférence dépendant de la position d'un objet au moyen d'un interféromètre confocal de Fabry-Perot (100, 200) qui comporte un premier et un deuxième miroir (1, 2) de résonateur et un miroir de convolution (7) disposé dans le parcours des rayons entre le premier et le deuxième miroir (1, 2) de résonateur, le miroir de convolution (7) étant accouplé mécaniquement à un objet dont la position doit être déterminée et le miroir de convolution (7) étant orienté de telle sorte qu'il dévie le parcours des rayons de l'interféromètre de Fabry-Perot (200) du premier miroir (1) de résonateur jusque sur le deuxième miroir (2) de résonateur et du deuxième miroir (2) de résonateur sur le premier miroir (1) de résonateur,
détecter le motif d'interférence et
évaluer le signal de mesure obtenu par la détection, en vue de déterminer la position de l'objet.

$I_R \sim (1+ Cos2kx)/2$
and
$k = 2\pi/\lambda$

Fig. 1

Fig. 2

Fig.3

Fig. 6

17

Fig. 4

$$\delta = 2f\alpha$$
$$\delta < D/2$$
$$\delta > MFD/2$$

Fig. 5

**Fig. 8**

**Fig. 7**

*Fig. 9*

*Fig. 10*

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2045572 A1
- WO 8303010 A1
- DE 4018998 A1
- EP 2045572 A